(19) **Europäisches Patentamt / European Patent Office / Office européen des brevets**

(11) **EP 1 325 806 B1**

(12) **EUROPEAN PATENT SPECIFICATION**

(45) Date of publication and mention
of the grant of the patent:
**25.03.2009 Bulletin 2009/13**

(51) Int Cl.:
***B29C 47/92*** *(2006.01)*     ***B29C 47/16*** *(2006.01)*

(21) Application number: **01967697.2**

(22) Date of filing: **17.09.2001**

(86) International application number:
**PCT/JP2001/008042**

(87) International publication number:
**WO 2002/024433 (28.03.2002 Gazette 2002/12)**

(54) **METHOD OF MANUFACTURING SHEET**

VERFAHREN ZUR HERSTELLUNG VON FOLIE

PROCEDE DE FABRICATION DE FEUILLES

(84) Designated Contracting States:
**DE FR GB**

(30) Priority: **19.09.2000  JP 2000283183
30.01.2001  JP 2001021484**

(43) Date of publication of application:
**09.07.2003  Bulletin 2003/28**

(73) Proprietor: **TORAY INDUSTRIES, INC.
Tokyo 103-8666 (JP)**

(72) Inventors:
• **UEHARA, Masatsugu
Otsu-shi,
Shiga 520-0842 (JP)**

• **NAKAI, Yasuhiro
Kouka-gun,
Shiga 520-3801 (JP)**
• **HIRATA, Hajime
Moriyama-shi,
Shiga 524-0022 (JP)**

(74) Representative: **Weber, Joachim
Hoefer & Partner
Patentanwälte
Pilgersheimer Strasse 20
81543 München (DE)**

(56) References cited:
**EP-A2- 0 307 076        EP-A2- 0 542 177
FR-A1- 2 713 539        JP-A- 1 278 324
JP-A- 3 281 216         JP-A- 9 323 351
JP-B2- 5 076 412        US-A- 5 691 908**

**Description**

Technical Field

The present invention relates to a method of manufacturing a sheet such as a film.

Background Art

Practically used is a sheet production method, in which a polymer is extruded from a die having a plurality of thickness adjusting means and molded into a sheet, being subsequently continuously fed through a sheet forming process such as stretching process, wherein the thickness distribution of the obtained sheet in the transverse direction of the sheet is measured by means of a thickness measuring device, and the thickness adjusting means are controlled by means of a controller to ensure that the measured thickness values become close to a predetermined desired value.

In such a sheet production method, it is important that the correspondence relationships between the respective thickness adjusting means and the sheet thickness measuring positions are accurately decided. If the correspondence relationships are not accurately decided, it happens that the thickness of the sheet at a position different from a position to be adjusted is adjusted, and that since the sheet thickness cannot be accurately controlled, the quality of the sheet declines.

If the sheet is uniformly stretched in the respective portions in the transverse direction, the measuring positions corresponding to the respective thickness adjusting means can be decided from the similarity relation between the sheet width at the casting position and the sheet width at the measuring position. However, actually, the neck-in phenomena occur and the stretched conditions are different from place to place in the transverse direction. So, the correspondence relationships cannot be decided simply using the similarity relation as described above, and the thickness values must be measured at the respective measuring positions corresponding to the thickness adjusting means.

As a method for deciding the correspondence relationships between the thickness adjusting means and the measuring positions, for example, the sheet immediately after having been discharged from the die is inked at the positions corresponding to the thickness adjusting means for marking lines in the running direction, and the marked positions are observed to decide the measuring positions corresponding to the thickness adjusting means. This method is simple, but has a problem that inking soils the rollers used for feeding the sheet, and as a result, that the sheet per se is also soiled.

As a known method for solving the problem, specific thickness adjusting means are manipulated by predetermined values, and at a position where the thickness variations of the sheet caused by it reach a steady state, the peak positions of the sheet thickness variations are detected, so that the measuring positions closest to the peak positions are decided as the positions corresponding to the specific thickness adjusting means JP-A-9 323 351.

JP 01 278324 A, JP-A-9 323 351 and JP-A-3 281 216 disclose different methods for adjusting the film thickness of a film. FR-A1-2 713 539 discloses a method for adjusting the film thickness of a film based on different measurements transversal to the film.

EP-A2-0 542 177 discloses a film thickness controller and a film molding apparatus comprising the same. The film molding apparatus comprises a die having a mechanism for adjusting and operating a discharge amount of molten resin along with the width of the film and a thickness gauge for detecting the thickness. A subtracter calculates the difference between a thickness value detected by the thickness gauge and a set thickness value at a position of the detection, wherein this information is mathematically converted so that in the end, the thickness of the film can be controlled even if operation conditions are varied.

EP-A2-0 307 076 describes a method for controlling the thickness of a sheet, wherein the thickness of the resultant sheet is measured at different positions and the information thereon is fed to a CPU which controls adjusting means.

FR-A1-2 713 539 discloses a method for adjusting the film thickness of a film based on different measurements transversal to the film.

US-A-5 691 908 concerns method and a device for spatially assigning actuators and there effects during the transverse profile control of a continuous material web.

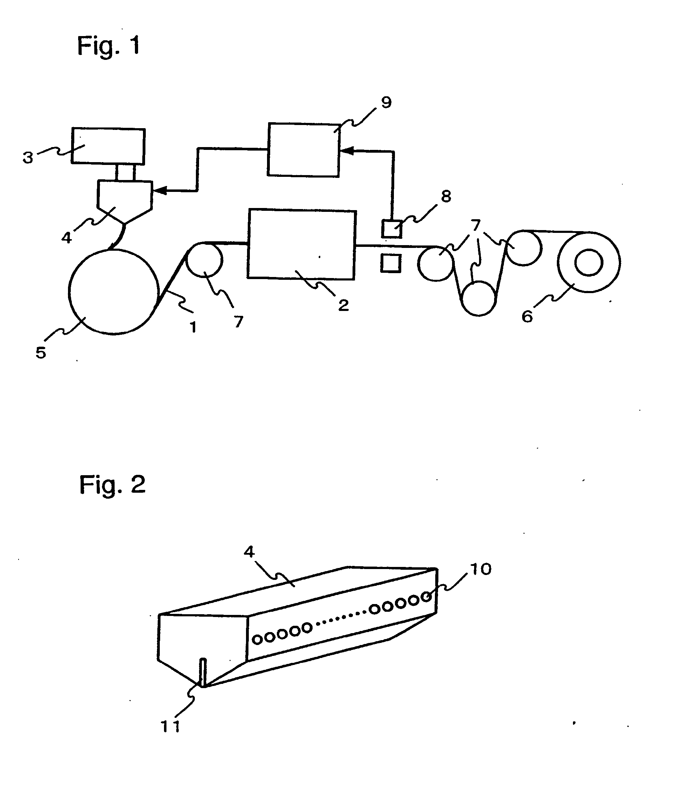

JP-B2-5 076 412 describes a method for manufacturing sheets using a polymer which is extruded and molded. Figure 1 shows a scheme of the manufacturing method showing that a thickness measuring device delivers data via a CPU to the outlet of a die, thus, controlling the thickness in an early state of the manufacturing of the sheet.

However, since it takes a long time till the thickness variations reach a steady state, it takes a long time till the peak positions of sheet thickness variations are detected, to make the material loss large disadvantageously.

Disclosure of the Invention

The invention has been completed to solve this problem. The object of the invention is to provide a method of manufacturing sheet that allows the correspondence relationships between thickness adjusting means and thickness measuring positions to be quickly and accurately decided in response to the differences of dies and film forming conditions, to ensure that the thickness can be accurately controlled.

To solve the above problem, the method of manufacturing sheet of the invention is a sheet production method, in which a polymer is extruded and molded into a sheet using a die having plural thickness adjusting means; the thickness distribution of the sheet in the transverse direction is measured; manipulated variables applied to the thickness adjusting means are obtained based on the measured values and the correspondence relationships between the specific thickness adjusting means; and the manipulated variables are delivered to the thickness adjusting means, for controlling the thickness of the sheet, characterized in that for specific thickness adjusting means of said thickness adjusting means, each of the manipulated variables is calculated by adding a manipulated variable change in conformity with a time series pattern changing from 0 to a predetermined peak value and subsequently changing toward a predetermined offset value smaller than said peak value in absolute value, to the manipulated variable working immediately before; the calculated manipulated variables are delivered to said specific thickness adjusting means, to obtain thickness variations of the sheet; the correspondence relationships between the specific thickness adjusting means and the thickness measuring positions are decided based on the obtained thickness variations of the sheet.

It is also a preferable mode of the invention, that when the correspondence relationships are decided, the manipulated variables of plural ones of said thickness adjusting means, respectively adjacent to each of said specific thickness adjusting means are also changed.

It is also a preferable mode of the invention, that the time series patterns respectively expressing a manipulated variable change are decided based on the results of a thickness adjusting simulation using a formula expressing the relation between the manipulated variables of the thickness adjusting means and the sheet thickness values to be obtained with the manipulated variables.

It is also a preferable mode of the invention, that the manipulated variables of specific thickness adjusting means and the two each thickness adjusting means on both sides of each of the specific thickness adjusting means are changed in conformity with the time series patterns respectively expressing a manipulated variable change decided based on the results of said thickness adjusting simulation.

It is also a preferable mode of the invention, that after delivering the manipulated variables which is the sum of the manipulated variables changes in conformity with the time series patterns and the manipulated variables working immediately before to said specific thickness adjusting means sequentially, the sum of the manipulated variables added said manipulated variable changes and the manipulated variable changes in conformity with the time series patterns identical with said patterns but reversed in sign are delivered to said specific thickness adjusting means sequentially.

To solve the above problem, the method of manufacturing sheet of the invention is a sheet production method, the sheet production method of the invention is also a sheet production method, in which a polymer is extruded and molded into a sheet using a die having plural thickness adjusting means; the thickness distribution of the sheet in the transverse direction is measured; the manipulated variables applied to said respective thickness adjusting means are obtained based on the measured values and the correspondence relationships between the specific thickness adjusting means; and the manipulated variables are used to manipulate the thickness adjusting means, characterized in that a standard time series pattern expressing sheet thickness distribution variations, with its center at the measuring position corresponding to any thickness adjusting means receiving a predetermined manipulated variable, prepared beforehand, is compared with the time series patterns of measured thickness distribution values obtained when said predetermined manipulated variable is actually applied to specific thickness adjusting means; based on the results of comparison, the correspondence relationships between said specific thickness adjusting means and thickness measuring positions are decided; and said respective thickness adjusting means are manipulated based on the correspondence relationships.

It is also a preferable mode of the invention, that the square sum error between the standard time series pattern expressing sheet thickness distribution variations and the time series data of measured sheet thickness distribution values with their center at any of the measuring positions is calculated; and the measuring position at which the square sum error becomes minimum is decided as the measuring position corresponding to the thickness adjusting means receiving said manipulated variable.

It is preferable that the standard time series pattern expressing thickness distribution variations is prepared based on the measured thickness values affected when the thickness adjusting means is manipulated by the predetermined value, or from a dynamic numerical formula expressing the relation between the manipulated variables of thickness adjusting means and the sheet thickness values obtained with said manipulated variables.

Brief Description of the Drawings

Fig. 1 is a schematic illustration showing a film forming process as an example of the invention.

Fig. 2 is an expanded perspective view showing an important portion of the die shown in Fig. 1.

Fig. 3 is a diagram showing time series patterns expressing manipulated variable changes in an example of the invention.

Fig. 4 is a diagram showing the change of a manipulated variable obtained by applying a time series pattern expressing a manipulated variable change to a specific thickness adjusting means and immediately thereafter applying a pattern reversed in sign, in an example of the invention.

Fig. 5 is a diagram showing the actual thickness change obtained when the manipulated variable of an optional thickness adjusting means is changed, in an example of the invention.

Fig. 6 is a block diagram for carrying out a control simulation to decide the time series patterns respectively expressing a manipulated variable change, in an example of the invention.

Fig. 7 is a diagram showing time series patterns expressing manipulated variable changes in an example of the invention.

Fig. 8 is a diagram showing the correspondence relationships between the thickness adjusting means positions and sheet thickness measuring positions, for deciding the corresponding positions in an example of the invention.

Fig. 9 is a diagram showing the correspondence relationships between all the thickness adjusting means and sheet thickness measuring positions, in an example of the invention.

Fig. 10 is a diagram showing the sheet thickness values after manipulating the thickness adjusting means in an example of the invention.

Fig 11 is a diagram showing the correspondence relationships between all the thickness adjusting means and sheet thickness measuring positions in an example of the invention.

Fig. 12 is a diagram for comparing the invention and a conventional method in the change of the sheet thickness at a corresponding position with the lapse time.

Fig. 13 is a diagram showing a standard time series pattern expressing sheet thickness changes, in an example of the invention.

Fig. 14 is a diagram showing a time series pattern expressing actual sheet thickness changes, in an example of the invention.

Fig. 15 is a diagram showing a measured sheet thickness distribution at the final measuring time in Fig. 14.

< Meanings of symbols >

1: Sheet
2: Stretching machine
3: Extruder
4: Die
5: Cooling roller
6: Winder
7: Carrier roll
8: thickness measuring device
9: Control means
10: Thickness adjusting means
11: Slit
21: Positions of thickness adjusting means
21a-d: Positions of thickness adjusting means, for which the corresponding sheet thickness measuring positions should be decided based on manipulated variable changes
22: Sheet thickness measuring positions '
22a-d: Sheet thickness measuring positions corresponding to 21a-d
31: Thickness profile before manipulation
32: Thickness profile after manipulation

The Best Modes for Carrying out the Invention

The invention is described below in reference to drawings based on an embodiment in which the invention is applied to the production of a plastic film.

Fig. 1 shows a sheet producing equipment used in practicing the invention. Fig. 2 is an expanded perspective view showing an important portion of the die shown in Fig. 1.

The sheet producing equipment consists of an extruder 3 for extruding a polymer, a die 4 for molding the extruded polymer into a sheet, a cooling roller 5 for cooling the polymer molded into a sheet (hereinafter called the sheet 1), a stretching machine 2 for stretching the sheet 1 in machine and transverse directions, and a winder 6 for winding the stretched sheet 1. The die 4 has numerous thickness adjusting means 10 arranged in the transverse direction (the direction perpendicular to the paper surface of the drawing) of the sheet 1 and a slit 11 used for discharging the polymer. Furthermore, the sheet producing equipment has a thickness measuring device 8 for measuring the thickness distribution of the sheet in the transverse direction and a control means for controlling the thickness adjusting means based on the thickness distribution.

The thickness measuring device 8 can be any desired thickness gauge using $\beta$ rays, X rays, ultraviolet rays or light interference, and is used to measure the thickness distribution of a sheet in the transverse direction.

The control means 9 calculates the manipulated variables based on the differences between the measured thickness values and desired thickness value of the sheet 1, and delivers the obtained manipulated variables to the thickness adjusting means 10.

The manipulated variable is controlled variable, for example, the power rate supplied to the adjusting means.

The plural thickness adjusting means 10 are arranged at equal intervals in the die 4 in the transverse direction of the sheet 1. As the means for adjusting the sheet thickness, for example, a heat bolt method can be used. According to this method, heat bolts are used as the thickness adjusting means 10, and the temperatures of these bolts are changed to thermally expand or contract the bolts, for adjusting the slit 11 of the die 4. A lip heater method can also be used. According to the lip heater method, lip heaters are used as the thickness adjusting means 10, and the temperature of the polymer is changed, to change the viscosity of the polymer, for changing the flow of the polymer through the specific region of the slit, thereby adjusting the thickness of the sheet 1.

It is preferable that the control means 9 treats the deviation data that are the differences between the measured thickness values and the desired thickness value, for conversion such as filtration. The filtration treatment can be carried out by means of moving average treatment in the transverse direction of the sheet, or weighted average treatment with the deviation data obtained before the present time.

Furthermore, the control means 9 calculates the manipulated variables based on the filter-treated deviation data of number of the thickness adjusting means, for controlling the thickness adjusting means 10. The control method used can be PID control or modern control.

In the sheet production equipment, the correspondence relationships between the respective thickness adjusting means and the respective thickness measuring positions are approximately known, but to accurately control the sheet thickness, it is necessary that the correspondence relationships can be accurately decided. Furthermore, to decrease the loss of the raw sheet, the time taken for deciding the correspondence relationships must be short. The method for deciding the correspondence relationships between the respective thickness adjusting means and the respective thickness measuring positions of the sheet in this embodiment is described below.

At first, several thickness adjusting means used for deciding the corresponding thickness measuring positions are selected. It is preferable, in view of the accuracy in deciding the corresponding positions, to keep the selected thickness adjusting means away from each other to such an extent that the thickness variation distributions obtained with respective manipulated variable changes do not interfere with each other.

How to change the manipulated variables of the selected respective thickness adjusting means is described below. The time series pattern expressing the manipulated variable change to be applied to each thickness adjusting means changes from 0 to a predetermined peak value and subsequently changes to a predetermined offset value smaller in absolute value than said peak value.

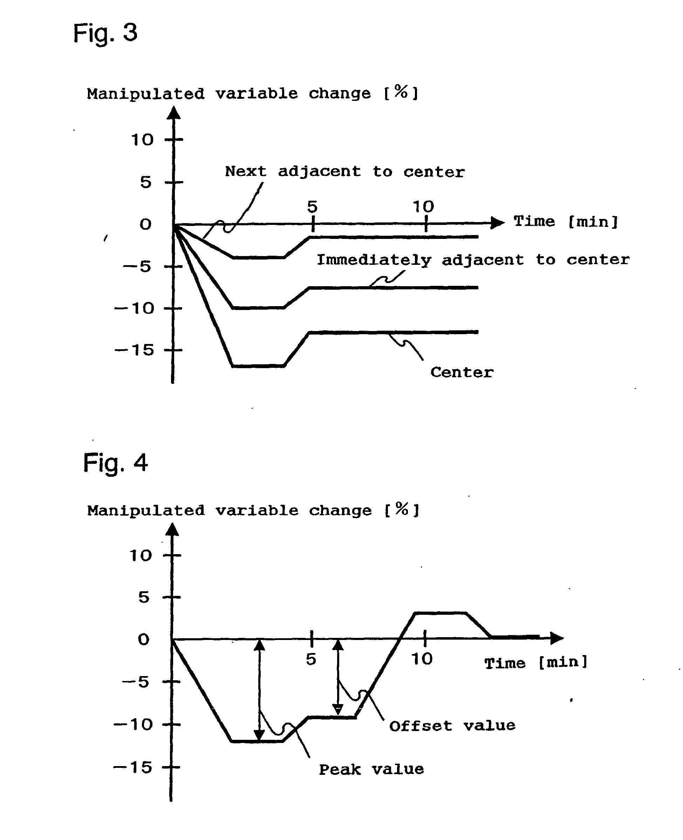

Furthermore, it is preferable to manipulate not only the respectively selected thickness adjusting means, but also the thickness adjusting means adjacent to the respectively selected thickness adjusting means. In consideration of the form of the thickness variations appearing in the transverse direction, it is preferable to manipulate up to two each adjacent thickness adjusting means on both sides of each of the selected thickness adjusting means. Fig. 3 shows an example of the time series patterns expressing manipulated variable changes. The change at the central position is made largest and the changes at both the end portions are made smaller. In this case, compared with a case of manipulating the thickness adjusting means at the central position only, the convex thickness distribution for deciding the corresponding position appears earlier, and the corresponding position can be decided in a short time.

Moreover, it is preferable to decide the time series patterns respectively expressing a manipulated variable change based on the results of a thickness control simulation, since the convex thickness distributions can be formed more quickly. In this case, the time series patterns respectively expressing a manipulated variable change are prepared as described below. At first, the formula expressing the relation between the manipulated variables to be delivered to thickness adjusting means and the sheet thickness values to be obtained with the manipulated variables is prepared. The influence of the manipulated variable change of a thickness adjusting means on the thickness distribution in the transverse direction of the sheet takes a distribution form close to the Gaussian function, and the variations of the sheet thickness with the lapse of time at respective measuring positions close to the measuring position corresponding to said thickness adjusting means can be approximated by a first-order lag system. Therefore, if the thickness distribution in the transverse direction of a sheet and the changes with the lapse of time at respective thickness measuring positions are combined, a formula showing the relation between the manipulated variables and the sheet thickness values can be obtained.

It is preferable that the variance and maximum value of the Gaussian function and the time constant of the first-order lag system are decided from measured values, etc. The formula can be a formula that expresses either the thickness distribution in the transverse direction of the sheet or the changes with the lapse of time at respective thickness measuring positions only. Then, the formula is realized on a computer, and a thickness control simulation is carried out. In this case, it is preferable that the control method used is a control method used for actual sheet production such as PID control or modern control. In the control simulation, the convex distribution form obtained when the control variable of any optional thickness adjusting means is changed is treated as a desired thickness distribution. With the thickness control simulation, time series patterns respectively expressing a manipulated variable change are obtained. Among the time series patterns obtained like this, it is preferable to use the time series patterns respectively expressing a manipulated variable change, for the specific thickness adjusting means used for deciding the corresponding positions and for up to two each adjacent thickness adjusting means on both sides of each of the specific thickness adjusting means, since the convex thickness distributions for deciding the corresponding positions appear earlier to allow the corresponding positions to be decided in a shorter time.

The time series patterns respectively expressing a manipulated variable change decided as described above are added to the manipulated variables working immediately before, to calculate the manipulated variables, and the calculated manipulated variables are applied to the thickness adjusting means used for deciding the corresponding positions and also to the thickness adjusting means adjacent to them. With this operation, compared with the case of manipulating the thickness adjusting means used for deciding the corresponding positions only, the thickness distribution changes in the transverse direction of the sheet can be observed using a thickness measuring device in a shorter time. The changed thickness distribution in the transverse direction is observed as a form having peaks at the positions corresponding to the places receiving the control variable changes, and if the obtained peak positions are identified as the thickness measuring positions corresponding to the specific thickness adjusting means, the correspondence relationships can be decided.

After the correspondence relationships are decided, if the manipulated variable changes in conformity with the time series patterns identical with said time series patterns expressing the added manipulated variable changes but reversed in sign are added to the offset manipulated variable, a flat thickness distribution can be restored quickly and accurately. If the time series patterns expressing the added manipulated variable changes are {a(1), a(2), a(3), ..., a(n-1), a(n)}, the reversed patterns are {-a(1), -a(2), -a(3), ..., -a(n-1), -a(n)}. If the time series pattern expressing a manipulated variable change is applied to a specific thickness adjusting means and the time series pattern expressing a manipulated variable change reversed in sign is applied immediately after, to return the manipulated variable to an original level, then the manipulated variable changes as shown in Fig. 4.

If the above operation procedure is repeated, the respectively corresponding thickness measuring positions can be decided for all the thickness adjusting means, but in this case, the working time becomes very long while the material loss becomes enormous. So, it is preferable that the correspondence relationships at several positions decided according to the above operation are used to decide the correspondence relationships not yet decided, by means of interpolation.

The method of deciding the correspondence relationships between the respective thickness adjusting means and the respective thickness measuring positions of a sheet as another embodiment of the invention is described below.

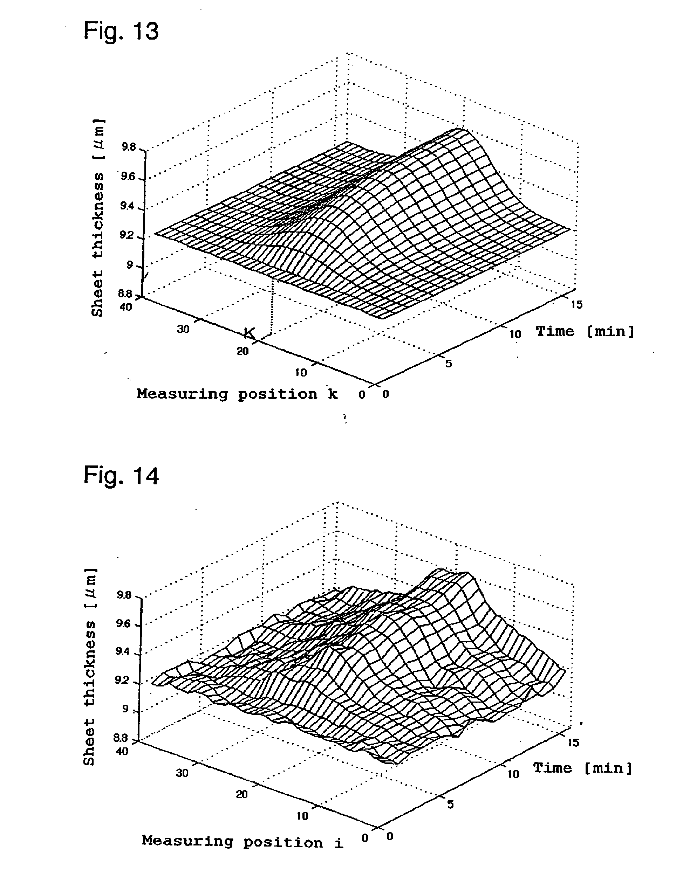

At first, a time series pattern expressing sheet thickness distribution variations in a predetermined section in the case where a thickness adjusting means is manipulated by a predetermined value, as shown in Fig. 13, is prepared. In Fig. 13, k denotes any measuring position in the transverse direction of the sheet, and t, measuring time. It is desirable that the predetermined section is a section in which the sheet thickness changes by about 5% when the thickness adjusting means is manipulated. Furthermore, it is desirable that the range of time is a range from the measuring time when the sheet thickness begins to change to the measuring time when the thickness change appears to become steady, but it can also be shorter than this above range if the sheet thickness keeps changing in this range. The time series pattern of Fig. 13 is a standard pattern in which the measuring position corresponding to the manipulated thickness adjusting means is K.

The time series pattern shown in Fig. 13 is prepared, for example, as described below. At first, in a process for producing a film controlled in thickness distribution to some extent, when an optional, for example, central thickness adjusting means 10 (Fig. 2) is manipulated, particularly, by applying a manipulated variable step-wise from the control means 9 (Fig. 1), the time series change of the sheet thickness distribution in a predetermined section where the sheet thickness is changed by said manipulated variable is measured, and this operation is performed plural times to obtain plural sets of time series data of thickness distribution variations, for averaging them. As another method, the numerical formula expressing the relation between manipulated variables and sheet thickness values obtained when a thickness adjusting means is manipulated by predetermined values is used to prepare the time series pattern. For example, in a state where the thickness distribution is controlled stably to some extent, if a manipulated variable is applied step-wise from the control means 9 to the thickness adjusting means 10, the thickness distribution in the transverse direction of the sheet has a distribution form close to the Gaussian function with its center at the measuring position corresponding to the thickness adjusting means because of the influence of interference. Furthermore, the variations of the sheet thickness with lapse of time at the respective measuring positions near the measuring position corresponding to the thickness adjusting means can be approximated by a first-order lag system. It is preferable that the variance and maximum value of the Gaussian function and the time constant of the first-order lag are decided from measured values, etc. If the thickness distribution in the transverse direction of the sheet and the changes with the lapse of time at the respective thickness measuring positions are combined in this way, a standard time series pattern expressing a sheet thickness distribution as shown in Fig. 13 can be obtained. Fig. 13 shows a time series pattern from the moment when the effect of the manipulated variable applied to the thickness adjusting means actually begins to show its effect in the sheet thickness.

Then, of the plural thickness adjusting means, certain manipulated variables are applied to two or more thickness adjusting means apart from each other at predetermined intervals, preferably at such intervals that the mutual interference of thickness variation distributions due to the manipulation of the thickness adjusting means can be neglected. It is preferable that the manipulated variables applied to the thickness adjusting means are step-wise changed as done for preparing said time series pattern. And the time series data of the sheet thickness distribution corresponding to one of the thickness adjusting means receiving the manipulated variables, in said predetermined section in the transverse direction of the sheet, are measured. In this case, since the thickness measuring position corresponding to the thickness adjusting means receiving the manipulated variable is known approximately, it is only required to measure the time variations of the sheet thickness distribution in the predetermined section near the measuring position. Then, the measured time series data are compared with the time series pattern prepared beforehand shown in Fig. 13, and based on the results, the thickness measuring positions corresponding to the respective thickness adjusting means are decided.

A preferable method for comparing the measured time series pattern of sheet thickness distribution with the standard time series pattern of sheet thickness distribution prepared beforehand is as follows. Assuming that the sheet thickness at position k in the transverse direction of the sheet in the standard time series pattern of sheet thickness distribution prepared beforehand and at time t is $g_k(t)$, and that the actually measured value in the sheet thickness distribution at measuring position i and time t is $y_i(t)$, the similarity $J_i$ between the time series pattern of measured thickness distribution values and the standard time series pattern of sheet thickness distribution prepared beforehand at the measuring position i is obtained from the following formula as a square sum error.

**(Formula 1)**

$$ J_i \ = \ \sum_{t=1}^{tm} \sum_{j=-\alpha}^{\alpha} \ \{y_{i+j}(t) - g_{k+j}(t)\}^2 $$

where t = 1, 2, ..., tm is the number of sheet thickness distribution measuring times. Section $[-\alpha, \alpha]$ is said predetermined section, and it is preferable that the section is decided in reference to the die and the performance of the thickness gauge.

In the above, i is changed in a range in which it can be the measuring position corresponding to the thickness adjusting means receiving said manipulated variable. The i that makes the $J_1$ smallest can be decided as the measuring position corresponding to the thickness adjusting means.

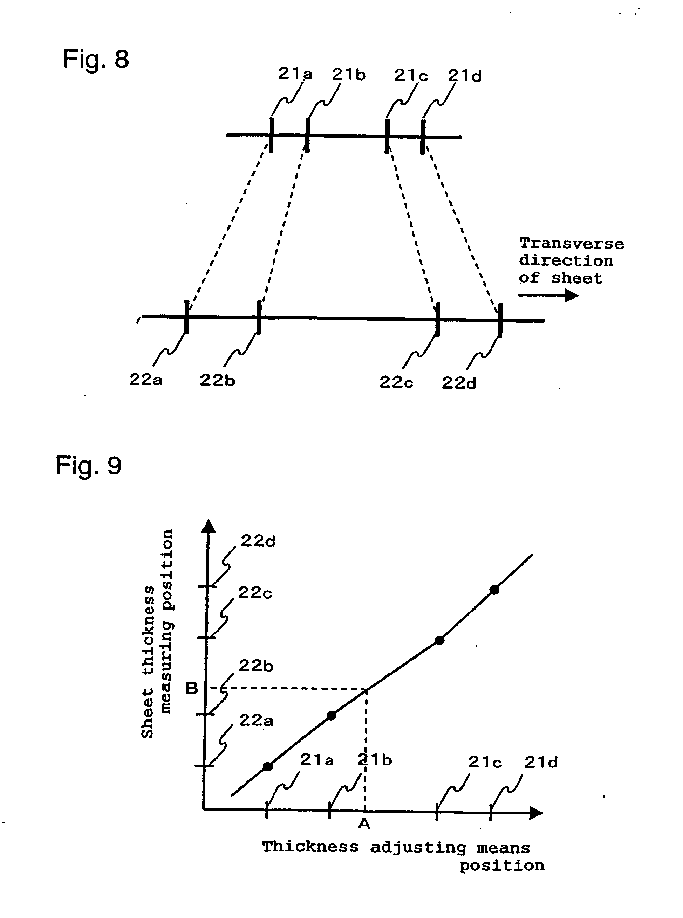

The above method is carried out for all the thickness adjusting means receiving the manipulated variables. Fig. 8 is an illustration showing a case where manipulated variables are applied to the four thickness adjusting means of 21a through d. In this case, the sheet thickness measuring positions corresponding to said four thickness adjusting means are 22a through d. Furthermore, Fig. 9 is a graph showing the correspondence relationships with the thickness adjusting means position chosen as the abscissa and with the sheet thickness measuring position, as the ordinate. The measuring positions corresponding to the thickness adjusting means not receiving any manipulated variable can be obtained from the graph shown in Fig. 9. For example, the measuring position corresponding to the thickness adjusting means A of Fig. 9 can be decided as B. The measuring positions corresponding to the thickness adjusting means outside the thickness adjusting means receiving the manipulated variables can be obtained from the graph shown in Fig. 9 by means of extrapolation.

Example 1

An example, in which the invention is applied to a film production process, is described below.

At first, firstly, the time series patterns respectively expressing a manipulated variable change were decided by means of thickness control simulation. In this example, the thickness adjusting means were heat bolts, and each manipulated variable was an electric energy delivered to each bolt, normalized as a ratio to the maximum value and represented in percentage (%).

The effects of the manipulated variable change of a thickness adjusting means on the thickness values in the transverse direction of the sheet were found to be 1.0 as the effect on the corresponding position, 0.7 as the effect on the positions immediately adjacent to the corresponding position, and 0.2 as the effect on the positions next adjacent to the corresponding position, based on measured values.

Therefore, with $\alpha_1 = 0.7$ and $\alpha_2 = 0.2$, the interference matrix W could be expressed as

$$W = \begin{vmatrix} 1 & \alpha_1 & \alpha_2 & 0 & & \cdot & \cdot & \cdot & & 0 \\ \alpha_1 & 1 & \alpha_1 & \alpha_2 & 0 & & & & & 0 \\ \alpha_2 & \alpha_1 & 1 & \alpha_1 & \alpha_2 & 0 & & & & 0 \\ 0 & \alpha_2 & \alpha_1 & 1 & \alpha_1 & \alpha_2 & 0 & & & 0 \\ 0 & 0 & \alpha_2 & \alpha_1 & 1 & \alpha_1 & \alpha_2 & \cdot & & \cdot \\ 0 & & & & 1 & \cdot & \cdot & \cdot & & \cdot \\ \cdot & & & \cdot & \cdot & \cdot & \cdot & \cdot & & \cdot \\ \cdot & & & \cdot & & & \cdot & & & \alpha_2 \\ \cdot & & & & \cdot & \alpha_2 & \alpha_1 & 1 & & \alpha_1 \\ 0 & \cdot & \cdot & \cdot & & 0 & \alpha_2 & \alpha_1 & & 1 \end{vmatrix}$$

Furthermore, in general, the time relation between manipulated variables and thickness values can be approximated by the dead time and the first-order lag system. From measured values, time constant was set at 3.2 scans, the gain, at 0.06 $\mu$ m/% and the dead time, at 5 scans, where a scan is a unit of control period. In this example, 1 scan corresponds to 50 seconds. From the above, the formula expressing the relation between manipulated variable u and sheet thickness y was expressed, using discrete-time transfer function G(z), as follows.

$$y(z) = G(z)u(z) = -0.06 \times \frac{0.27}{z - 0.73} z^{-5} Wu(z)$$

where z expresses z-transformation.

Secondly, the above formula was realized in a computer, and a simulation by PID control was carried out. The parameters in PID control were finally decided as follows based on the values actually used for film production.

Proportional gain: $K_P = 6.0$, integral time: $K_I = 0.4$, derivative time: $K_D = 0.2$

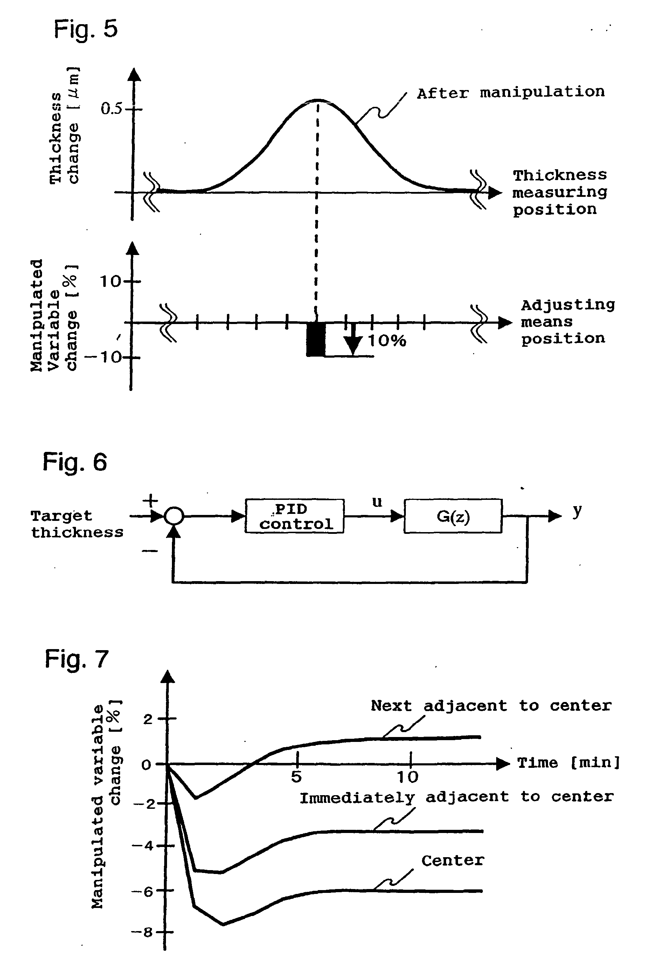

The simulation was a control simulation in which the target thickness was to conform to the convex thickness distribution form shown in Fig. 5 obtained a sufficient time later when the thickness distribution flat at time 0 was changed by changing the manipulated variable of an optional thickness adjusting means by 10%. Fig. 6 shows the block diagram for carrying out the simulation. As a result of the simulation, of the obtained time series data of the manipulated variables, the time series data of the central thickness adjusting means largest in the manipulated variable change and two each thickness adjusting means on both sides of it, i.e., five thickness adjusting means in total were used as the time series patterns for deciding the corresponding position. The obtained time series patterns expressing manipulated variable changes are shown in Fig. 7.

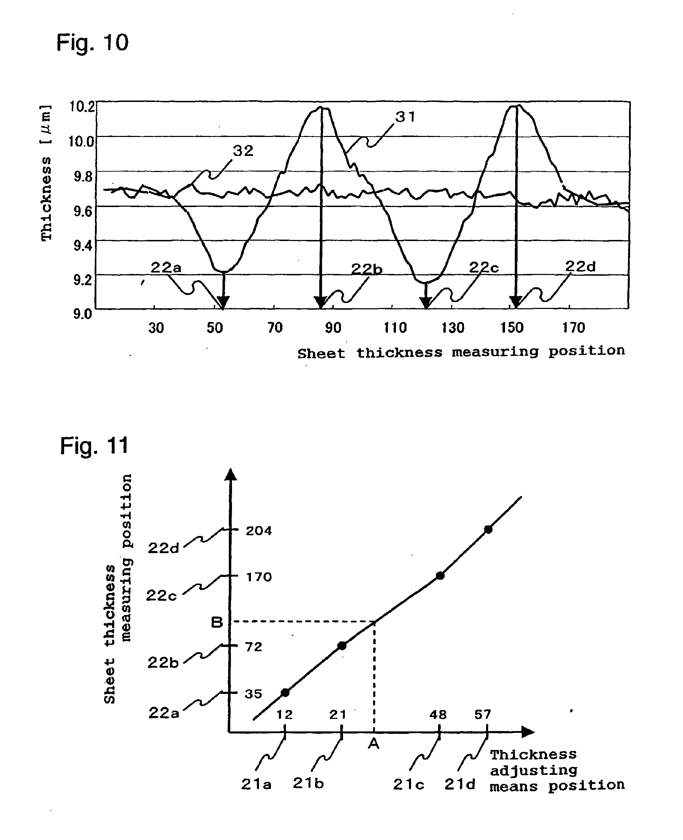

Thirdly it was decided to select four thickness adjusting means apart from each other at such intervals that the mutual interference of thickness variation distributions due to the manipulated variable changes could be neglected, for deciding their corresponding positions. The four thickness adjusting means at positions 21a through d of Fig. 8 were set at 12, 21, 48 and 57 respectively, and the manipulated variables applied to the respective thickness adjusting means were changed like the pattern for the central position shown in Fig. 7. Furthermore, the thickness adjusting means respectively immediately adjacent to them and those respectively next adjacent to them were also simultaneously changed as shown in Fig. 7. However, since 21a and 21c were intended to cause thickness changes in depressed form, the manipulated variables were changed in the time change patterns reverse to those of Fig. 7 in sign. Fig. 10 shows thickness distributions before and after changing the manipulated variables. Thickness distribution 32 is the thickness distribution before changing the manipulated variables. Since the positions 21a through d were apart from each other at such intervals that the mutual interference of the thickness variation distributions due to manipulated variable changes could be neglected, a thickness distribution 31 having four peaks could be obtained. The peak positions 22a through d were decided as the sheet thickness measuring positions corresponding to the four thickness adjusting means. Fig. 11 is a graph showing the correspondence relationships with the thickness adjusting means position chosen as the abscissa and the sheet thickness measuring position, as the ordinate.

Finally the correspondence relationships of the thickness adjusting means not decided in corresponding positions were decided. That is, they were decided like B as the measuring position corresponding to the thickness adjusting means A as shown in Fig. 11. The measuring positions corresponding to the thickness adjusting means outside the thickness adjusting means receiving the manipulated variables were obtained by means of extrapolation in reference to the correspondence relationships of the outside two means. In this way, the corresponding positions of all the thickness adjusting means were decided, and when a sheet was produced, it did not have any practical problem.

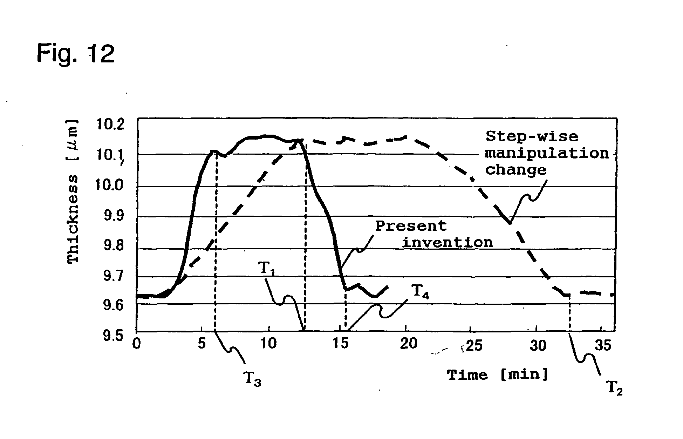

For comparison, Fig. 12 shows the change of thickness with the lapse of time at the measuring position 22b in the case where the manipulated variable of 21b was changed step-wise. Till the changed manipulated variable reached a steady state, a time decided by the time constant peculiar to the process was necessary, and till the thickness distribution form required for deciding the corresponding position was reached, it took $T_1 = 13$ [min]. After the corresponding position was decided, the manipulated variable was stepwise returned to the level working before the decision, to return the thickness to the original level. As a result, it took $T_2 = 33$ [min] from the time when the corresponding position began to be decided till the time when the thickness was returned to the original level. On the other hand, according to the method of the invention, the time taken till the corresponding position was decided was $T_3 = 6$ [min], and it took $T_4 = 16$ [min] from the time when the corresponding position began to be decided till the time when the thickness was returned to the original level. As a result, the working time could be shortened to less than one second. To return the thickness distribution to a flat distribution, a time series pattern expressing a manipulated variable change identical with that used till the decision of the corresponding position but reversed in sign was applied to return both the manipulated variable and thickness to the original levels.

As described above, in the invention, while the accuracy in the decision of the correspondence relationships between the thickness adjusting means and the thickness measuring positions is kept as in the conventional method, the time taken for deciding the corresponding positions can be remarkably shortened, to allow the working to be completed in a short time. As a result, the loss of the raw sheet can be remarkably saved.

Example 2

An example in which the other embodiment of the invention is applied to a film production process is described below.

To the thickness adjusting means at position 21a of Fig. 8, the same step-wise manipulated variable as used for preparing the time series pattern shown in Fig. 13 was applied. The time series data of measured thickness distribution values in this case are shown in Fig. 14. Fig. 14 shows the time series data after the time when the effect actually began to appear in the sheet thickness.

From the respective measured thickness values of Figs. 13 and 14, the corresponding measuring position was decided using formula 1. In this example, whenever the measuring position i changes by 1, the measuring position changes by 15 mm.

As a result, when the measuring position i was 21, $J_1$ became smallest, and this position was decided as the corresponding position.

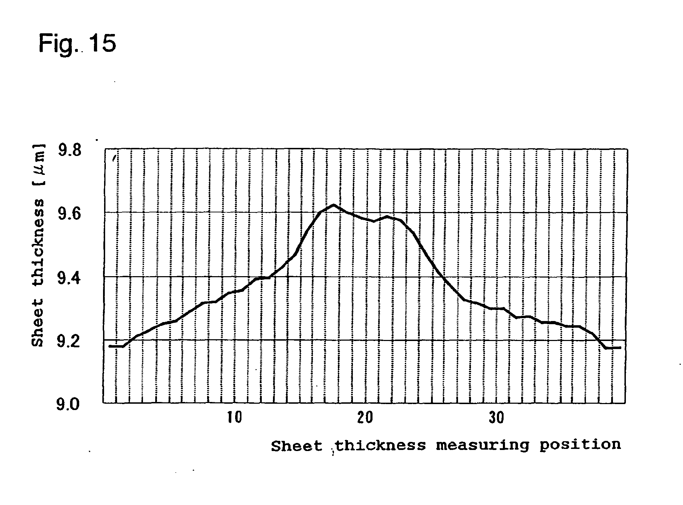

For comparison, Fig. 15 shows a thickness distribution profile in the final measuring time of Fig. 14 (16 minutes after the influence of the manipulated variable applied to the thickness adjusting means actually appeared in the thickness of the film). There are two peak positions, and it is difficult to decide the corresponding position from the peak positions using the data only. Furthermore, the thickness variation extends in a wide range in the transverse direction of the sheet, and the form is not symmetrical about the center. Therefore, according to a method of simply obtaining the center of gravity for deciding it as the corresponding position, the corresponding position cannot be decided accurately.

In the invention, since the corresponding position is not obtained from one thickness distribution profile unlike the conventional method, but is decided in comparison with a dynamic thickness variation pattern, it can be decided accurately.

Industrial Availability

The present invention allows the correspondence relationships between the thickness adjusting means and the thickness measuring positions to be decided quickly and accurately. Therefore, since the work of deciding the corresponding positions can be completed in a short time, the loss of the raw material can be decreased and when a sheet is produced, the thickness can be adjusted accurately, to improve the yield, hence productivity.

Furthermore in the invention, a time series pattern of sheet thickness variations in a predetermined period in a predetermined section in the transverse direction of the sheet obtained when at least one thickness adjusting means is manipulated is prepared beforehand, and when the thickness adjusting means is manipulated actually, the sheet thickness values in said predetermined period in said predetermined section in the transverse direction of the sheet are measured. Then, the time series pattern of sheet thickness is compared with said measured thickness values, to decide the correspondence relationships between the thickness adjusting means and the thickness measuring position, when the sheet is produced. In this case, since the thickness can be adjusted accurately, the yield and productivity can be improved.

**Claims**

1.    A method of manufacturing a sheet (1), in which a polymer is extruded and molded into a sheet (1) using a die (4) having plural thickness adjusting means (10); the thickness distribution of the sheet (1) in the transverse direction is measured; manipulated variables applied to the thickness adjusting means (10) are obtained based on the measured values and the correspondence relationships between the specific thickness adjusting means (10) and the thickness measuring positions; and the manipulated variables are delivered to the thickness adjusting means (10), for controlling the thickness of the sheet (1), **characterized in that** for specific thickness adjusting means (10) of said thickness adjusting means (10), each of the manipulated variables is calculated by adding a manipulated variable change in conformity with a time series pattern changing from 0 to a predetermined peak value and subsequently changing toward a predetermined offset value smaller than said peak value in absolute value, to the manipulated variable working immediately before; the calculated manipulated variables are delivered to said specific thickness adjusting means (10), to obtain the thickness variations of the sheet (1); the correspondence relationships between the specific thickness adjusting means (10) and the thickness measuring positions are decided based on the obtained thickness variations of the sheet (1).

2.    A method of manufacturing a sheet (1) according to claim 1, wherein when the correspondence relationships are decided, the manipulated variables of plural ones of said thickness adjusting means (10), respectively adjacent to each of said specific thickness adjusting means (10) are also changed.

3.    A method of manufacturing a sheet (1) according to claim 1, wherein the time series patterns respectively expressing a manipulated variable change are decided based on the results of a thickness adjusting simulation using a formula expressing the relation between the manipulated variables of the thickness adjusting means (10) and the sheet thickness values to be obtained with the manipulated variables.

4.    A method of manufacturing a sheet (1) according to claim 3, wherein the manipulated variables of specific thickness adjusting means (10) and the two each thickness adjusting means (10) on both sides of each of the specific thickness adjusting means (10) are changed in conformity with the time series patterns respectively expressing a manipulated variable change decided based on the results of said thickness adjusting simulation.

5.    A method of manufacturing a sheet (1) according to claim 1, wherein after delivering the manipulated variables which is the sum of the manipulated variables changes in conformity with the time series patterns and the manipulated variables working immediately before to said specific thickness adjusting means (10) sequentially, the manipulated variables which is the sum of the offset manipulated variable and the time series patterns identical with said patterns but reversed in sign are delivered to said specific thickness adjusting means (10) sequentially.

6. A method of manufacturing a sheet (1), in which a polymer is extruded and molded into a sheet (1) using a die having plural thickness adjusting means (10); the thickness distribution of the sheet (1) in the transverse direction is measured; the manipulated variables applied to said respective thickness adjusting means (10) are obtained based on the measured values and the correspondence relationships between the specific thickness adjusting means (10) and the thickness measuring positions; and the manipulated variables are used to manipulate the thickness adjusting means (10), **characterized in that** a standard time series pattern of sheet thickness distribution variations, with its center at the measuring position corresponding to any thickness adjusting means (10) receiving a predetermined manipulated variable, prepared beforehand, is compared with the time series patterns of measured thickness distribution values obtained when said predetermined manipulated variable is actually applied to specific thickness adjusting means (10); based on the results of comparison, the correspondence relationships between said specific thickness adjusting means (10) and thickness measuring positions are decided; and said respective thickness adjusting means (10) are manipulated based on the correspondence relationships.

7. A method of manufacturing a sheet (1) according to claim 6, wherein the square sum error between the standard time series pattern of sheet thickness distribution variations and the time series data of measured sheet thickness distribution values with their center at any of the measuring positions is calculated; and the measuring position at which the square sum error becomes minimum is decided as the measuring position corresponding to the thickness adjusting means (10) receiving said manipulated variable.

8. A method of manufacturing a sheet (1) according to claim 6, wherein the standard time series pattern of thickness variation distribution is prepared based on the measured thickness values affected when the thickness adjusting means (10) is manipulated by the predetermined value.

9. A method of manufacturing a sheet (1) according to claim 6, wherein the standard time series pattern of thickness variation distribution is prepared from a dynamic numerical formula expressing the relation between the manipulated variables of thickness adjusting means (10) and the sheet thickness values obtained with said manipulated variables.

**Patentansprüche**

1. Verfahren zur Herstellung einer Folie (1), wobei ein Polymer extrudiert und unter Verwendung eines Ausformwerkzeugs (4) mit einer Mehrzahl von Dickeneinstellungseinrichtungen (10) zu einer Folie (1) ausgeformt wird; wobei die Dickeverteilung der Folie (1) in der Querrichtung gemessen wird; wobei auf die Dickeneinstellungseinrichtungen (10) angewandte Einstellvariablen auf der Basis der gemessenen Werte und der Zuordnungsbeziehungen zwischen den spezifischen Dickeneinstellungseinrichtungen (10) und den Dickenmesspositionen erlangt werden; und wobei die Einstellvariablen den Dickeneinstellungseinrichtungen (10) bereitgestellt werden, um die Dicke der Folie (1) zu regeln,
**dadurch gekennzeichnet, dass**
für spezifische Dickeneinstellungseinrichtungen (10) der Dickeneinstellungseinrichtungen (10) jede der Einstellvariablen berechnet wird, indem eine Einstellvariablenveränderung in Übereinstimmung mit einem Zeitreihenmuster, das sich von 0 zu einem vorbestimmten Größtwert verändert und sich danach zu einem vorbestimmten Korrekturwert verändert, der als Absolutwert kleiner als der Größtwert ist, zu der unmittelbar davor wirkenden Einstellvariablen hinzugefügt wird;
die berechneten Einstellvariablen den spezifischen Dickeneinstellungseinrichtungen (10) zugeführt werden, um die Dickenveränderungen der Folie (1) zu erzielen;
die Zuordnungsbeziehungen zwischen den spezifischen Dickeneinstellungseinrichtungen (10) und den Dickenmesspositionen auf der Basis der erzielten Dickenveränderungen der Folie (1) bestimmt werden.

2. Verfahren zur Herstellung einer Folie (1) gemäß Anspruch 1, wobei, wenn die Zuordnungsbeziehungen festgestellt sind, die Einstellvariablen von mehreren der Dickeneinstellungseinrichtung (10), die jeweils zu jeder der spezifischen Dickeneinstellungseinrichtungen (10) benachbart sind, auch verändert werden.

3. Verfahren zur Herstellung einer Folie (1) gemäß Anspruch 1, wobei die Zeitreihenmuster, die jeweils eine Einstellvariablenveränderung darstellen, auf der Basis der Ergebnisse einer Dickeneinstellungssimulation unter Verwendung einer Formel festgelegt werden, die die Beziehung zwischen den Einstellvariablen der Dickeneinstellungseinrichtung (10) und den Foliendickenwerten ausdrückt, die mit den Einstellvariablen erzielt werden.

4. Verfahren zur Herstellung einer Folie (1) gemäß Anspruch 3, wobei die Einstellvariablen spezifischer Dickeneinstellungseinrichtungen (10) und der jeweils zwei Dickeneinstellungseinrichtungen (10) auf beiden Seiten jeder der spezifischen Dickeneinstellungseinrichtungen (10) in Übereinstimmung mit den Zeitreihenmustern verändert werden, die jeweils eine Einstellvariablenveränderung ausdrücken, die auf der Basis der Ergebnisse der Dickeneinstellungssimulation festgestellt worden ist.

5. Verfahren zur Herstellung einer Folie (1) gemäß Anspruch 1, wobei nach dem sequenziellen Bereitstellen der Einstellvariablen, welche die Summe der Einstellvariablenveränderungen in Übereinstimmung mit den Zeitreihenmustern und der unmittelbar davor wirkenden Einstellvariablen sind, an den spezifischen Dickeneinstellungseinrichtungen (10), die Einstellvariablen, welche die Summe der Korrektureinstellvariablen und der Zeitreihenmuster sind, die mit den Mustern identisch sind, aber umgekehrte Vorzeichen aufweisen, sequenziell den spezifischen Dickeneinstellungseinrichtungen (10) bereitgestellt werden.

6. Verfahren zur Herstellung einer Folie (1), wobei ein Polymer extrudiert und unter Verwendung eines Ausformwerkzeugs mit einer Mehrzahl von Dickeneinstellungseinrichtungen (10) zu einer Folie (1) ausgeformt wird; wobei die Dickeverteilung der Folie (1) in der Querrichtung gemessen wird; wobei die auf die jeweiligen Dickeneinstellungseinrichtungen (10) angewandten Einstellvariablen auf der Basis der gemessenen Werte und der Zuordnungsbeziehungen zwischen den spezifischen Dickeneinstellungseinrichtungen (10) und den Dickenmesspositionen erlangt werden; und wobei die Einstellvariablen dafür verwendet werden, um die Dickeneinstellungseinrichtungen (10) einzustellen;
**dadurch gekennzeichnet, dass** ein Standard-Zeitreihenmuster von Foliendickenverteilungsveränderungen, dessen Mitte sich an der Messposition befindet, die mit irgend einer Dickeneinstellungseinrichtung (10) korrespondiert, die eine vorab erstellte, vorbestimmte Einstellvariable erhält, mit den Zeitreihenmustern von gemessenen Dickenverteilungswerten verglichen wird, die erlangt werden, wenn die vorbestimmte Einstellvariable auf spezifische Dickeneinstellungseinrichtungen (10) tatsächlich angewandt wird; dass auf der Basis der Vergleichsergebnisse die Zuordnungsbeziehungen zwischen den spezifischen Dickeneinstellungseinrichtungen (10) und den Dickenmesspositionen bestimmt werden; und dass die jeweilige Dickeneinstellungseinrichtung (10) auf der Basis der Zuordnungsbeziehungen eingestellt werden.

7. Verfahren zur Herstellung einer Folie (1) gemäß Anspruch 6, wobei die quadratische Fehlersumme zwischen dem Standard-Zeitreihenmuster von Foliendickeverteilungsveränderungen und den Zeitreihendaten gemessener Foliendickeverteilungswerte, deren Mitte sich an irgendeiner der Messpositionen befindet, berechnet wird; und wobei die Messposition, bei der die quadratische Fehlersumme minimal wird, als die Messposition bestimmt wird, die mit der Dickeneinstellungseinrichtung (10) korrespondiert, die die Einstellvariable annimmt.

8. Verfahren zur Herstellung einer Folie (1) gemäß Anspruch 6, wobei das Standard-Zeitreihenmuster der Dickenveränderungsverteilung auf der Basis der gemessenen Dickenwerte erstellt wird, die bewirkt werden, wenn die Dickeneinstellungseinrichtung (10) mit dem vorbestimmten Wert eingestellt ist.

9. Verfahren zur Herstellung einer Folie (1) gemäß Anspruch 6, wobei das Standard-Zeitreihenmuster der Dickenveränderungsverteilung mit einer dynamischen numerischen Formel erstellt wird, die die Beziehung zwischen den Einstellvariablen der Dickeneinstellungseinrichtung (10) und den Foliendickenwerten ausdrückt, die mit den Einstellvariablen erzielt werden.

## Revendications

1. Procédé pour fabriquer une feuille (1), dans lequel un polymère est extrudé et moulé en une feuille (1) en utilisant un moule (4) ayant plusieurs moyens de réglage d'épaisseur (10), la distribution d'épaisseur de la feuille (1) dans la direction transversale est mesurée ; des variables manipulées appliquées aux moyens de réglage d'épaisseur (10) sont obtenues en fonction des valeurs mesurées et des relations de correspondance entre les moyens de réglage d'épaisseur spécifique (10) et les positions de mesure d'épaisseur ; et les variables manipulées sont délivrées aux moyens de réglage d'épaisseur (10) pour contrôler l'épaisseur de la feuille (1), **caractérisé en ce que** pour les moyens de réglage d'épaisseur spécifique (10) desdits moyens de réglage d'épaisseur (10), chacune des variables manipulées est calculée en ajoutant un changement de variable manipulée en conformité avec un modèle de série temporelle passant de 0 à une valeur de pic prédéterminée et passant ensuite à une valeur décalée prédéterminée inférieure à ladite valeur de pic en valeur absolue, jusqu'à la variable manipulée qui fonctionne immédiatement avant ; les variables manipulées calculées sont délivrées auxdits moyens de réglage d'épaisseur spécifique (10) afin d'obtenir les variations d'épaisseur de la feuille (1) ; les relations de correspondance entre les moyens de réglage d'épaisseur spécifique (10) et les positions de mesure d'épaisseur sont décidées en fonction des variations d'épaisseur obtenues de la feuille (1).

**2.** Procédé pour fabriquer une feuille (1) selon la revendication 1, dans lequel lorsque les relations de correspondance sont décidées, les variables manipulées de plusieurs desdits moyens de réglage d'épaisseur (10), respectivement adjacents à chacun desdits moyens de réglage d'épaisseur spécifique (10) sont également modifiées.

**3.** Procédé pour fabriquer une feuille (1) selon la revendication 1, dans lequel les modèles de série temporelle exprimant respectivement un changement de variable manipulée sont décidés en fonction des résultats d'une simulation de réglage d'épaisseur en utilisant une formule exprimant la relation entre les variables manipulées des moyens de réglage d'épaisseur (10) et les valeurs d'épaisseur de feuille à obtenir avec les variables manipulées.

**4.** Procédé pour fabriquer une feuille (1) selon la revendication 3, dans lequel les variables manipulées des moyens de réglage d'épaisseur spécifique (10) et deux de chacun des moyens de réglage d'épaisseur (10) des deux côtés de chacun des moyens de réglage d'épaisseur spécifique (10) sont modifiées en conformité avec les modèles de série temporelle exprimant respectivement un changement de variable manipulé décidé en fonction des résultats de ladite simulation de réglage d'épaisseur.

**5.** Procédé pour fabriquer une feuille (1) selon la revendication 1, dans lequel après la distribution des variables manipulées qui représente la somme des changements de variables manipulées en conformité avec les modèles de série temporelle et les variables manipulées fonctionnant immédiatement avant lesdits moyens de réglage d'épaisseur spécifique de manière séquentielle, les variables manipulées qui sont la somme de la variable manipulée décalée et des modèles de série temporelle identiques auxdits modèles mais de signe inverse, sont délivrées auxdits moyens de réglage d'épaisseur spécifique (10) de manière séquentielle.

**6.** Procédé pour fabriquer une feuille (1), dans lequel un polymère est extrudé et moulé en une feuille (1) en utilisant un moule ayant plusieurs moyens de réglage d'épaisseur (10) ; la distribution de l'épaisseur de la feuille (1) dans la direction transversale est mesurée ; les variables manipulées appliquées auxdits moyens de réglage d'épaisseur (10) respectifs sont obtenues en fonction des valeurs mesurées et des relations de correspondance entre les moyens de réglage d'épaisseur spécifique (10) et les positions de mesure d'épaisseur ; et les variables manipulées sont utilisées pour manipuler les moyens de réglage d'épaisseur (10), **caractérisé en ce qu'**un modèle de série temporelle standard des variations de distribution d'épaisseur de feuille, avec son centre au niveau de la position de mesure qui correspond à l'un quelconque des moyens de réglage d'épaisseur (10) recevant une variable manipulée prédéterminée, préparée à l'avance, est comparé avec les modèles de série temporelle des valeurs de distribution d'épaisseur mesurées obtenues lorsque ladite variable manipulée prédéterminée est vraiment appliquée aux moyens de réglage d'épaisseur spécifique (10), en fonction des résultats de comparaison, les relations de correspondance entre lesdits moyens de réglage d'épaisseur spécifique (10) et les positions de mesure d'épaisseur sont décidées ; et lesdits moyens de réglage d'épaisseur (10) respectifs sont manipulés en fonction des relations de correspondance.

**7.** Procédé pour fabriquer une feuille (1) selon la revendication 6, dans lequel l'erreur de somme au carré entre le modèle de série temporelle standard des variations de distribution d'épaisseur de feuille et les données de série temporelle des valeurs de distribution d'épaisseur de feuille mesurées avec leur centre au niveau de l'une quelconque des positions de mesure est calculée ; et la position de mesure à laquelle l'erreur de somme au carré devient maximum est décidée en tant que position de mesure correspondant aux moyens de réglage d'épaisseur (10) recevant ladite variable manipulée.

**8.** Procédé pour fabriquer une feuille (1) selon la revendication 6, dans lequel le modèle de série temporelle standard de la distribution de variation d'épaisseur est préparé en fonction des valeurs d'épaisseur mesurées affectées lorsque les moyens de réglage d'épaisseur (10) sont manipulés par la valeur prédéterminée.

**9.** Procédé pour fabriquer une feuille (1) selon la revendication 6, dans lequel le modèle de série temporelle standard de la distribution de variation d'épaisseur est préparé à partir d'une formule numérique dynamique exprimant la relation entre les variables manipulées des moyens de réglage d'épaisseur (10) et les valeurs d'épaisseur de feuille obtenues avec lesdites variables manipulées.

Fig. 1

Fig. 2

## Fig. 3

Manipulated variable change [%]

Next adjacent to center

Immediately adjacent to center

Center

## Fig. 4

Manipulated variable change [%]

Offset value

Peak value

Fig. 5

Thickness change [ μm ]

0.5

After manipulation

Thickness measuring position

Manipulated Variable change [ % ]

10

−10

10%

Adjusting means position

Fig. 6

Target thickness

+

−

PID control

u

G(z)

y

Fig. 7

Manipulated variable change [ % ]

2

0

−2

−4

−6

−8

5

10

Time [min]

Next adjacent to center

Immediately adjacent to center

Center

Fig. 8

21a  21b    21c  21d

Transverse
direction
of sheet
→

22a  22b        22c  22d

Fig. 9

Sheet thickness measuring position

22d

22c

22b

B

22a

21a  21b        21c  21d

A

Thickness adjusting means
position

Fig. 10

Fig. 11

## Fig. 12

# Fig. 13

# Fig. 14

Fig. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9323351 A
- JP 1278324 A
- JP 3281216 A
- FR 2713539 A1

- EP 0542177 A2
- EP 0307076 A2
- US 5691908 A
- JP 5076412 B